# EUROPEAN PATENT SPECIFICATION

(11) **EP 2 325 918 B1**
(45) Date of publication and mention of the grant of the patent: **27.07.2016**
(21) Application number: 10251915.4
(22) Date of filing: 10.11.2010
(51) Int. Cl.: H01M 2/02, H01M 2/10, H01M 10/04, H01M 10/052

(54) **Secondary battery**
Sekundärbatterie
Batterie secondaire

(30) Priority: 19.11.2009 KR 20090112198
(43) Date of publication of application: 25.05.2011
(73) Proprietor: Samsung SDI Co., Ltd., Yongin-si, Gyeonggi-do (KR)
(72) Inventor: Kwak, Jung-Sup, Seocho-Gu Seoul 137-875 (KR); Ahn, Chang-Bum, Yongin-si Gyeonggi-do (KR)
(74) Representative: Mounteney, Simon James

(56) References cited:
- EP-A2- 1 291 934
- WO-A1-2008/023903
- WO-A1-2009/057894
- JP-A- 2004 055 151
- US-A1- 2005 260 492
- US-A1- 2007 128 513
- US-A1- 2009 098 417

## Description

### BACKGROUND OF THE INVENTION

The present invention relates to a secondary battery, and more particularly, to a pouch type second battery formed by accommodating an electrode assembly in a pouch case and sealing the pouch case.

### Description of the Related Art

Compact and lightweight portable electronic devices have rapidly developed and thus a demand for compact and high capacity batteries that are used as driving power sources for the portable electronic devices has increased. In particular, lithium ion secondary batteries operate at a voltage higher than 3.6 V, which is greater 3 times than nickel-cadmium (Ni-Cd) batteries or nickel-hydride (Ni-MH) batteries, and have a high energy density per unit weight and thus lithium ion secondary batteries are widely used as power sources for portable electronic devices.

Lithium secondary batteries generate electric energy resulting from an oxidation and deoxidation reaction when lithium ions are intercalated into and deintercalated from cathodes and anodes. Lithium secondary batteries may be fabricated by using reversibly intercalatible and deintercalatible materials as active materials of cathodes and anodes and charging an organic electrolyte or a polymer electrolyte between anodes and cathodes.

Secondary batteries may be fabricated in various ways. Secondary batteries may be classified into cylindrical batteries, quadrangular batteries, and pouch type batteries for example. Cylindrical batteries use cylindrical aluminum cans as cases. Quadrangular batteries use quadrangular aluminum cans as cases. Pouch type batteries use thin plate pouches as cases.

### SUMMARY OF THE INVENTION

The present invention provides a secondary battery according to claim 1 having reinforced rigidity having an easy venting structure.

Additional aspects will be set forth in part in the description which follows and, in part, will be apparent from the description, or may be learned by practice of the presented embodiments.

According to one or more embodiments of the invention, a secondary battery includes: an electrode assembly for charging or discharging a power source; and a case for accommodating the electrode assembly and being sealed, wherein the case comprises: a first cover and a second cover, wherein the electrode assembly is accommodated in a space formed between the first cover and the second cover, wherein the first cover and the second cover are formed of different materials, and wherein the second cover has strength against the surface pressure greater than the first cover.

A rating capacity of the secondary battery may be a medium/large size between about 4Ah and about 1000 Ah.

A thickness of the second cover may be greater than that of the first cover.

The secondary battery may further include: sealing portions for sealing the space in which the electrode assembly is accommodated by bonding a portion of the first cover and a portion of the second cover each other.

The secondary battery may further include: space portions for accommodating the electrode assembly between the first cover and the second cover that face each other.

The first cover may include: a metal layer formed of a metal material; an exterior layer formed on a surface facing the outside of the metal layer; and an interior layer formed on a surface facing the inside of the metal layer.

The second cover may include: a metal layer formed of a metal material; an exterior layer formed on a surface facing the outside of the metal layer; and an interior layer formed on a surface facing the inside of the metal layer.

A thickness of the metal layer of the second cover may be greater than that of the metal layer of the first cover.

The thickness of the metal layer of the first cover may be between about 40 µm and about 50 µm, and the thickness of the metal layer of the second cover may be between about 100 µm and about 250 µm.

The second cover may further include: a second exterior layer formed on a surface facing the outside of the exterior layer.

A melting point of the interior layer of the first cover may be lower than that of the interior layer of the second cover.

The melting point of the interior layer of the first cover may be between about 80 °C and about 120 °C, and the melting point of the interior layer of the second cover may be between about 130 °C and about 200 °C.

The secondary battery may further include: sealing portions for sealing the space in which the electrode assembly is accommodated by thermally cohering a portion of the interior layer of the first cover and a portion of the interior layer of the second cover that contact each other.

The interior layer of the first cover may include polyethylene (PE) or a PE polymer.

The interior layer of the second cover may include polyolefine or casted polypropylene (CPP) or PP as a main component.

Two or more cases in which the electrode assembly may be accommodated are stacked in the secondary battery.

According to one or more embodiments, a secondary battery include an electrode assembly for charging or discharging a power source; and a case for accommodating the electrode assembly and being sealed, wherein the case comprises: a first cover and a second cover, wherein the electrode assembly is accommodated in a space formed between the first cover and the second cover, wherein the first cover and the second cover are formed of different materials, and wherein a melting point of a surface of the first cover that contacts the second cover is lower than that of a surface of the second cover that contact the first cover.

A rating capacity of the secondary battery may be a medium/large size between about 4Ah and about 1000 Ah.

The melting point of the first cover may be between about 80 °C and about 120 °C, and the melting point of the second cover may be between about 130 °C and about 200 °C.

The melting point of the first cover may be between about 90 °C and about 110 °C.

A thickness of the second cover may be greater than that of the first cover.

The thickness of the first cover may be between about 100 µm and about 150 µm, and the thickness of the second cover may be between about 150 µm and about 300 µm.

The above and other features of the invention are set out in the appended claims.

### BRIEF DESCRIPTION OF THE DRAWINGS

These and/or other aspects will become apparent and more readily appreciated from the following description of embodiments of the invention, taken in conjunction with the accompanying drawings of which:
FIG. 1 is a perspective view of a secondary battery according to an embodiment of the invention;
FIG. 2 is an exploded perspective view of the secondary battery of FIG. 1 according to an embodiment of the invention;
FIG. 3 is a schematic cross-sectional view of a first cover of the secondary battery of FIG. 1 according to an embodiment of the invention;
FIG. 4 is a schematic cross-sectional view of a second cover of the secondary battery of FIG. 1 according to an embodiment of the invention; and
FIG. 5 is a schematic perspective view of a battery system in which a plurality of the second batteries of FIG. 1 is stacked according to an embodiment of the invention.

### DETAILED DESCRIPTION OF THE INVENTION

Reference will now be made in detail to embodiments of the invention, examples of which are illustrated in the accompanying drawings, wherein like reference numerals refer to the like elements throughout. In this regard, the present embodiments may have different forms and should not be construed as being limited to the descriptions set forth herein. Accordingly, the embodiments are merely described below, by referring to the figures, to explain aspects of the present description.

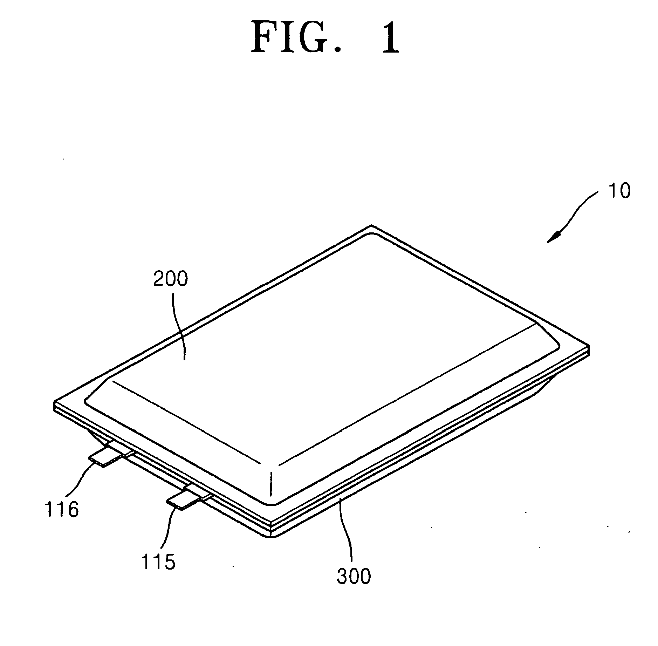

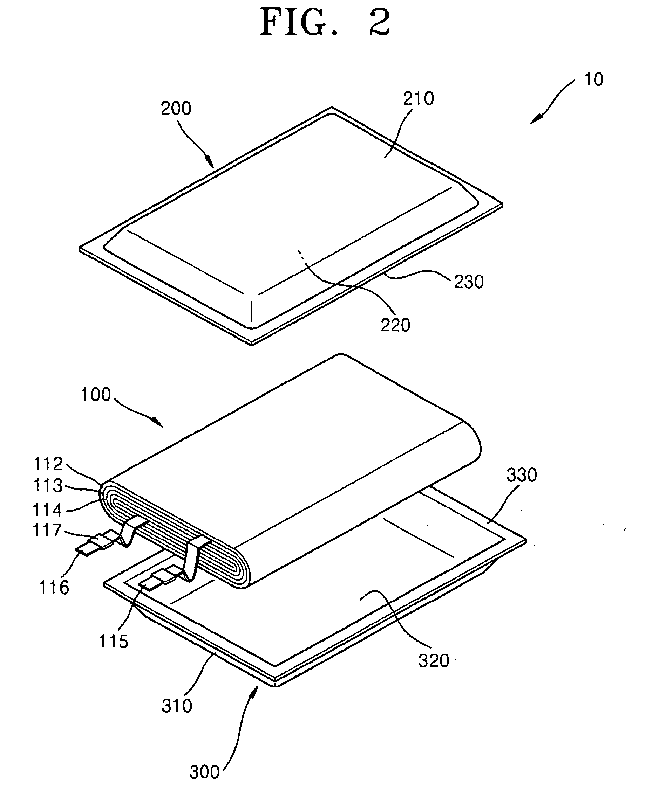

FIG. 1 is a perspective view of a secondary battery 10 according to an embodiment of the invention. FIG. 2 is an exploded perspective view of the secondary battery 10.

Referring to FIGS. 1 and 2, the secondary battery 10 includes an electrode assembly 100 and a case enclosing the electrode assembly 100. The electrode assembly 100 charges or discharges a power source. The case, which includes a first cover 200 and a second cover 300, accommodates the electrode assembly 100 therein and is sealed. The electrode assembly 100 is accommodated in a space disposed between the first cover 200 and the second cover 300.

The first cover 200 and the second cover 300 may be formed of different materials. In some embodiments, when pressure is applied to the second cover 300, it has a rigidity greater than that of the first cover 200 when pressure is applied to the first cover. In some embodiments, the thickness of the second cover 300 is greater than that of the first cover 200. In this case, the thickness of the first cover 200 may be from about 100 µm to about 150 µm, and the thickness of the second cover 300 may be from about 150 µm to about 300 µm.

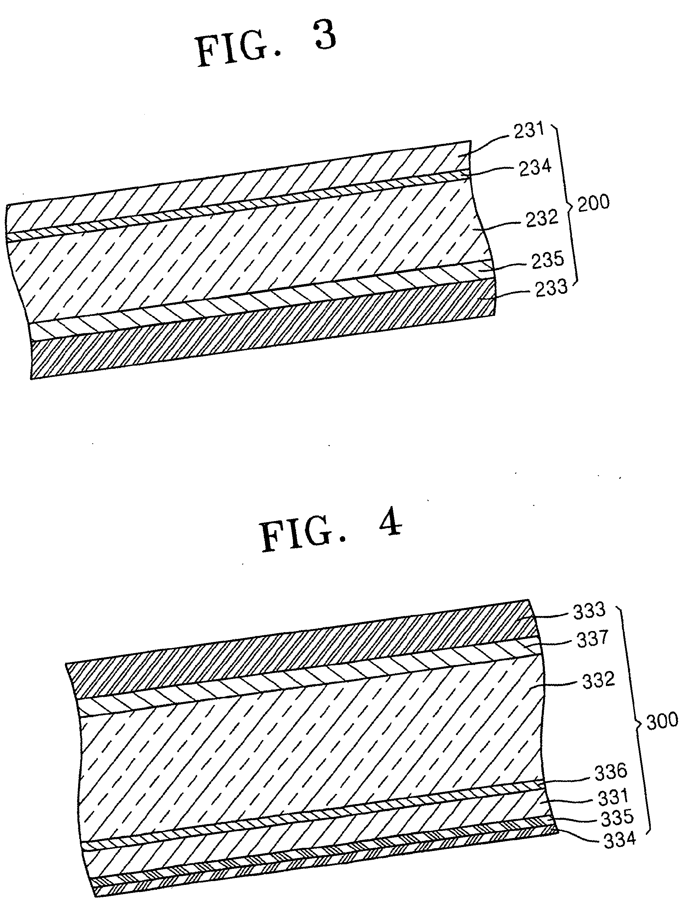

Thin plate pouch covers are used as the first cover 200 and the second cover 300. For example, a general pouch cover may be used as the first cover 200 as shown in FIG. 3, and a high strength pouch cover may be used as the second cover 300 as shown in FIG. 4.

In this embodiment, a high strength pouch cover is used as the second cover 300, making it possible to maintain a pouch shape while the secondary battery 10 is used for a long period of time, thereby preventing the electrode assembly 100 from being distorted.

Further, while the secondary battery 10 is used for a long period of time, the electrolyte is not inclined to one side of the secondary battery 10. Accordingly, the electrode assembly 100 is less likely to be damaged during a manufacturing process of the secondary battery 10.

A general pouch cover, which is less rigid than the high strength pouch cover used as the second cover 300, is used as the first cover 200. The general pouch cover is fractured at a lower temperature than the high strength pouch, thereby accomplishing an easy venting structure.

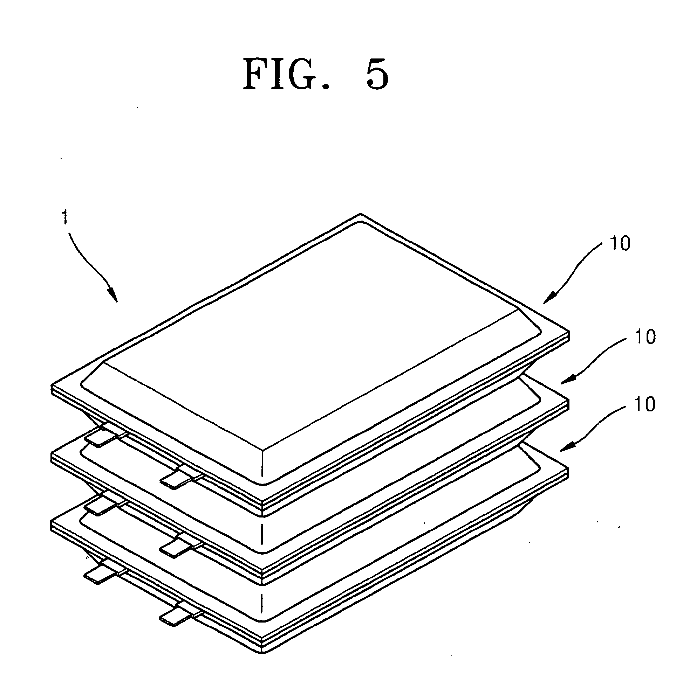

The secondary battery 10 of the present embodiment may be used in a medium/large battery system 1 that forms a single battery system, such as a hybrid electric vehicle (HEV) or a power storage system, by stacking a plurality of unit battery cells as shown in FIG. 5. The battery system 1 may be a medium/large battery system 1 having a current charge and discharge rate (C-rate) during an average discharge greater than 2 C or having a rating capacity greater than about 4 Ah from about 4 Ah to about 1000 Ah for power consumption greater than 20 wh. A defective cell within the stack can be identified and the battery system can be reformed to normal operation by removal of the cell. At a set temperature, for example, from about 80 °C to about 120 °C, the first cover 200 of such a defective battery, which is less rigid than the second cover 300, is fractured and is vented. Vacuum is released and thus an air flows into the secondary battery 10, and moisture contained in the air reacts with the electrode assembly 100, causing a voltage imbalance and increasing a resistance. Therefore, the defective secondary battery 10 can be easily selected by a sensor (not shown) installed in the secondary batteries 10 included in the battery system 1.

When the first cover 200 which is less rigid than the second cover 300 is vented, since the defective secondary battery 10 explodes at a relatively low temperature, the secondary batteries 10 neighboring the defective secondary battery 10 may be less affected. When the first cover 200 is vented at the temperature from about 80 °C to about 120 °C, the secondary batteries 10 may be controlled below a temperature of about 70 °C.

The first cover 200 and the second cover 300 may be formed in such a way that the melting point of the surface of the first cover 200 that contacts the second cover 300 is lower than that of a surface of the second cover 300 that contacts the first cover 200. Such embodiments of the first cover 200 and the second cover 300 are illustrated in FIGS. 3 and 4.

The melting point of the first cover 200 may be from about 80 °C to about 120 °C, and the melting point of the second cover 300 may be from about 130 °C to about 200 °C. In some embodiments, the melting point of the first cover 200 may be from about 90 °C to about 110 °C. Thus, if the temperature of the secondary battery 200 reaches from about 90 °C to about 110 °C, the first cover 200, which is less rigid than the second cover 300, may be fractured and be vented.

The secondary battery 10 may be formed by stacking a plurality of separators 113 disposed between a first electrode 112 and a second electrode 114 or winding the separators 113 in a jelly roll type structure.

A protection tape 117 is bonded to the surface of a first electrode tab 115 and the surface of a second electrode tab 116 that extend from one side of each electrode plate of the electrode assembly 100 so that the first electrode tab 115 and the second electrode tab 116 partially protrude toward the outside of the pouch type case (refer to FIG. 2).

Sealing portions 230 and 330 are formed on a marginal portion of the first cover 200 and a marginal portion of the second cover 300, respectively, by bonding the marginal portion of the first cover 200 and the marginal portion of the second cover 300 and sealing a space in which the electrode assembly 100 is accommodated. The space portions 220 and 320 for accommodating the electrode assembly 100 are formed between the first cover 200 and the second cover 300.

The space portions 220 and 320 are formed in a quadrangular shape in the first cover 200 and the second cover 300, and the sealing portions 230 and 300 are formed on four surfaces of the first cover 200 and the second cover 300 to surround the space portions 220 and 320.

The electrode assembly 100 is accommodated in the space portions 220 and 320 formed in the first cover 200 and the second cover 300, respectively, and the sealing portions 230 and 330 that face each other are sealed by a thermal cohesion by tightly adhering the first cover 200 and the second cover 30 each other, thereby forming the pouch covers 200 and 300.

The space portions 220 and 320 are formed in the first cover 200 and the second cover 300, respectively, in the present embodiment. However, the present embodiments are not limited thereto and the space portions 220 and 320 may be formed in any one of the first cover 200 and the second cover 300.

The first cover 200 and the second cover 300 may have a plate shape formed by stacking a plurality of film layers that are formed of different materials. In this case, the space portions 220 and 320 are not formed in the first cover 200 and the second cover 300, respectively, the electrode assembly 100 is disposed between the first cover 200 and the second cover 300, and the sealing portions 230 and 300 are sealed, thereby forming the pouch covers 200 and 300.

FIG. 3 is a schematic cross-sectional view of the first cover 200 of a secondary battery 10 according to an embodiment of the invention. Referring to FIG. 3, the first cover 200 includes a metal layer 232, an exterior layer 231, and an interior layer 233. The metal layer 232 is formed of a metal material. The exterior layer 231 is formed on a surface facing the outside of the metal layer 232. The interior layer 233 is formed on a surface facing the inside of the metal layer 232.

FIG. 4 is a schematic cross-sectional view of the second cover 300 of a secondary battery 10 according to an embodiment of the invention. Referring to FIG. 4, the second cover 300 includes a metal layer 332, an exterior layer 331, and an interior layer 333. The metal layer 332 is formed of a metal material. The exterior layer 331 is formed on a surface facing the outside of the metal layer 332. The interior layer 333 is formed on a surface facing the inside of the metal layer 332.

In this embodiment the thickness of the metal layer 332 of the second cover 300 is greater than that of the metal layer 232 of the first cover 200. Thus, the second cover 300 may resist surface pressure to a greater extent than the first cover 200. The thickness of the metal layer 232 of the first cover 200 may be between about 40 µm and about 50 µm, and the thickness of the metal layer 332 of the second cover 300 may be between about 100 µm and about 250 µm.

In this particular embodiment, the second cover 300 further includes a second exterior layer 334 formed on a surface facing the outside of the exterior layer 331. This enhances the thickness of the second cover 200 still further, thereby increasing its pressure resistance even more over that of the first cover 200.

The sealing portions 230 and 330 that are formed in the interior layer 233 of the first cover 200 and the interior layer 333 of the second cover 300 are thermally cohered to each other, thereby sealing the cases 200 and 300 in which the electrode assembly 100 is accommodated.

A melting point of the interior layer 233 of the first cover 200 is lower than that of the interior layer 333 of the second cover 300. The melting point of the interior layer 233 of the first cover 200 may be between about 80 °C and about 120 °C, and the melting point of the interior layer 333 of the second cover 300 may be between about 130 °C and about 200 °C. In this regard, the melting point of the interior layer 233 of the first cover 200 may be between about 90 °C and about 110 °C. Thus, if the temperature of the secondary battery 200 reaches between about 90 °C and about 110 °C, that is the melting point of the interior layer 233 of the first cover 200, the first cover 200 (which is less rigid than the second cover 300) may be fractured and be vented.

The first cover 200 also includes adhesive layers 234 and 235 in which adhesives are disposed between the metal layer 232 and the exterior layer 231 and between the metal layer 232 and the interior layer 233, respectively. In this regard, the metal layer 232, the exterior layer 231, and the interior layer 233 may be thermally cohered to each other by the adhesive layers 234 and 235.

The first cover 300 further includes adhesive layers 335, 336, and 337 in which adhesives are disposed between the metal layer 332 and the exterior layer 331, between the metal layer 332 and the interior layer 333, and between the exterior layer 331 and the second exterior layer 334, respectively. In this regard, the metal layer 332, the exterior layer 331, the interior layer 333, and the second exterior layer 334 may be thermally cohered to each other by the adhesive layers 335, 336, and 337.

The interior layer 233 of the first cover 200 may include polyethylene (PE) or a PE polymer. The interior layer 333 of the second cover 300 may include polyolefine or casted polypropylene (CPP) or PP as a main component. Thus, the interior layer 233 of the first cover 200 may be melt at a lower temperature than the interior layer 333 of the second cover 300.

The metal layers 232 and 332 maintain appropriate thicknesses, prevent moisture and gas from passing into the secondary battery 10, prevent the electrolyte from leaking, and maintain the rigidity of the pouch type case of the secondary battery 10. The metal layers 232 and 332 may be formed of any one selected from an alloy of iron (Fe), carbon (C), chromium (Cr), and manganese (Mn), an alloy of Fe, C, Cr, and nickel (Ni), aluminum (Al), and equivalents thereof. However, the present embodiments are not limited thereto and the metal layers 232 and 332 may be formed of aluminum (Al) having good flexibility.

The exterior layers 231 and 331 may be coated or laminated to a predetermined thickness on a surface facing the outside of the metal layers 232 and 332. The interior layers 233 and 333 may be coated or laminated to a predetermined thickness on a surface facing the inside of the metal layers 232 and 332.

According to the present embodiments, a secondary battery may have reinforced rigidity and have an easy venting structure.

It should be understood that the embodiments described herein should be considered in a descriptive sense only and not for purposes of limitation. Descriptions of features or aspects within each embodiment should typically be considered as available for other similar features or aspects in other embodiments.

## Claims

1. A secondary battery (10) comprising:
an electrode assembly (100) for charging or discharging a power source; and
a sealed case configured to accommodate the electrode assembly (100);
wherein the case comprises: a first cover (200) and a second cover (300);
wherein the electrode assembly (100) is accommodated in a space formed between the first cover (200) and the second cover (300);
wherein the second cover has a surface rigidity greater than that of the first cover (200);
wherein the melting point of a surface of the first cover (200) that contacts the second cover is (300) lower than that of a surface of the second cover that contacts the first cover;
wherein the first cover (200) comprises:
a first metal layer (232) formed of a metal material;
a first exterior layer (231) formed on an outer surface of the first metal layer; and
a first interior layer (233) formed on an inner surface of the first metal layer (232);
wherein the second cover (300) comprises:
a second metal layer (332) formed of a metal material;
a second exterior layer (331) formed on an outer surface of the second metal
layer; and
a second interior layer (333) formed on an inner surface of the second metal layer (332); wherein the melting point of the first interior layer (233) is from 80 °C to 120 °C and the melting point of the second interior layer (333) is from 130 °C to 200 °C.

2. A secondary battery (10) according to claim 1, wherein the first cover (200) and the second cover are formed from different materials.

3. A secondary battery (10) according to claim 1, wherein the capacity rating of the secondary battery (10) is from 4Ah to 1000 Ah.

4. A secondary battery (10) according to any preceding claim, wherein the thickness of the second cover (300) is greater than that of the first cover (200).

5. A secondary battery (10) according to any preceding claim, further comprising:
sealing portions (230, 350) for sealing the space in which the electrode assembly is accommodated by bonding a portion of the first cover and a portion of the second cover to each other.

6. A secondary battery according to any preceding claim, wherein the said space comprises first and second space portions (220,320) that face each other.

7. A secondary battery (10) according to any preceding claim, wherein thickness of the second metal layer (332) is greater than that of the first metal layer (232).

8. A secondary battery according to claim 7, wherein the thickness of the first metal layer is from 40 µm to 50 µm, and the thickness of the second metal layer is from 100 µm to 250 µm.

9. A secondary battery (10) according to to any preceding claim, wherein the second cover (300) further comprises a third exterior layer (334) formed on an outer surface of the second exterior layer.

10. A secondary battery (10) according to to any preceding claim, further comprising:
sealing portions (230,350) for sealing the space in which the electrode assembly is accommodated by thermally cohering a portion of the first interior layer and a portion of the second interior layer that contact each other.

11. A secondary battery according to to any preceding claim, wherein the first interior layer (233) comprises polyethylene (PE) or a PE polymer.

12. A secondary battery according to any preceding claim, wherein the second interior layer (333) comprises polyolefine or casted polypropylene (CPP) or PP as a main component.

13. A secondary battery (10) according to any preceding claim, wherein two or more cases in which a said electrode assembly is accommodated are stacked in the secondary battery (10).

14. A secondary battery (10) according to claim 1, wherein the melting point of the first cover (200) is from 80 °C to 120 °C, and the melting point of the second cover (300) is from 130 °C to 200 °C.

15. A secondary battery according to claim 14, wherein the melting point of the first cover (200) is from 90 °C, to 110 °C.

16. A secondary battery according to claim 1, wherein the thickness of the first cover (200) is from 100 µm to 150 µm, and the thickness of the second cover (300) is from 150 µm to 300 µm.

## Patentansprüche

1. Sekundärbatterie (10), umfassend:
eine Elektrodenanordnung (100) zum Laden oder Entladen einer Energiequelle; und
ein abgedichtetes Gehäuse, das konfiguriert ist, die Elektrodenanordnung (100) aufzunehmen;
wobei das Gehäuse umfasst: eine erste Abdeckung (200) und eine zweite Abdeckung (300);
wobei die Elektrodenanordnung (100) in einem zwischen der ersten Abdeckung (200) und der zweiten Abdeckung (300) gebildeten Raum untergebracht ist;
wobei die zweite Abdeckung (300) eine Oberflächensteifheit aufweist, die größer als jene der ersten Abdeckung (200) ist;
wobei der Schmelzpunkt einer Oberfläche der ersten Abdeckung (200), welche die zweite Abdeckung (300) kontaktiert, geringer als jene einer Oberfläche der zweiten Abdeckung ist, welche die erste Abdeckung kontaktiert;
wobei die erste Abdeckung (200) umfasst:
eine erste Metallschicht (232), die aus einem Metallmaterial gebildet ist;
eine erste Außenschicht (231), die auf einer äußeren Oberfläche der ersten Metallschicht gebildet ist;
und
eine erste Innenschicht (233), die auf einer inneren Oberfläche der ersten Metallschicht (232) gebildet ist;
wobei die zweite Abdeckung (300) umfasst:
eine zweite Metallschicht (332), die aus einem Metallmaterial gebildet ist;
eine zweite Außenschicht (331), die auf einer äußeren Oberfläche der zweiten Metallschicht gebildet ist; und
eine zweite Innenschicht (333), die auf einer inneren Oberfläche der zweiten Metallschicht (332) gebildet ist; wobei der Schmelzpunkt der ersten Innenschicht (233) von 80 °C bis 120 °C ist und der Schmelzpunkt der zweiten Innenschicht (333) von 130 °C bis 200 °C ist.

2. Sekundärbatterie (10) nach Anspruch 1, wobei die erste Abdeckung (200) und die zweite Abdeckung (300) aus unterschiedlichen Materialien gebildet sind.

3. Sekundärbatterie (10) nach Anspruch 1, wobei die Nennleistung der Sekundärbatterie (10) von 4 Ah bis 1000 Ah beträgt.

4. Sekundärbatterie (10) nach einem vorhergehenden Anspruch, wobei die Dicke der zweiten Abdeckung (300) größer als jene der ersten Abdeckung (200) ist.

5. Sekundärbatterie (10) nach einem vorhergehenden Anspruch, ferner umfassend:
Abdichtungsabschnitte (230, 330) zum Abdichten des Raumes, in dem die Elektrodenanordnung untergebracht ist, durch Bonden eines Abschnitts der ersten Abdeckung und eines Abschnitts der zweiten Abdeckung aneinander.

6. Sekundärbatterie (10) nach einem vorhergehenden Anspruch, wobei der Raum erste und zweite Raumabschnitte (220, 320) aufweist, die einander zugewandt sind.

7. Sekundärbatterie (10) nach einem vorhergehenden Anspruch, wobei die Dicke der zweiten Metallschicht (332) größer als jene der ersten Metallschicht (232) ist.

8. Sekundärbatterie (10) nach Anspruch 7, wobei die Dicke der ersten Metallschicht von 40 µm bis 50 µm beträgt, und die Dicke der zweiten Metallschicht von 100 µm bis 250 µm beträgt.

9. Sekundärbatterie (10) nach einem vorhergehenden Anspruch, wobei die zweite Abdeckung (300) ferner eine dritte Außenschicht (334) umfasst, die auf einer äußeren Oberfläche der zweiten Außenschicht gebildet ist.

10. Sekundärbatterie (10) nach einem vorhergehenden Anspruch, ferner umfassend:
Abdichtungsabschnitte (230, 330) zum Abdichten des Raumes, in dem die Elektrodenanordnung untergebracht ist, durch thermisches Zusammenkleben eines Abschnitts der ersten Innenschicht und eines Abschnitts der zweiten Innenschicht, die einander kontaktieren.

11. Sekundärbatterie nach einem vorhergehenden Anspruch, wobei die erste Innenschicht (233) Polyethylen (PE) oder ein PE-Polymer umfasst.

12. Sekundärbatterie nach einem vorhergehenden Anspruch, wobei die zweite Innenschicht (333) Polyolefin oder gegossenes Polypropylen (CPP) oder PP als eine Hauptkomponente umfasst.

13. Sekundärbatterie (10) nach einem vorhergehenden Anspruch, wobei zwei oder mehr Gehäuse, in denen eine Elektrodenanordnung untergebracht ist, in der Sekundärbatterie (10) gestapelt sind.

14. Sekundärbatterie (10) nach Anspruch 1, wobei der Schmelzpunkt der ersten Abdeckung (200) von 80 °C bis 120 °C beträgt, und der Schmelzpunkt der zweiten Abdeckung (300) von 130 °C bis 200 °C beträgt.

15. Sekundärbatterie nach Anspruch 14, wobei der Schmelzpunkt der ersten Abdeckung (200) von 90 °C bis 110 °C beträgt.

16. Sekundärbatterie nach Anspruch 1, wobei die Dicke der ersten Abdeckung (200) von 100 µm bis 150 µm beträgt, und die Dicke der zweiten Abdeckung (300) von 150 µm bis 300 µm beträgt.

## Revendications

1. Batterie secondaire (10) comprenant :
un assemblage d'électrode (100) pour charger ou décharger une source d'énergie ; et
un boîtier étanche destiné à recevoir l'assemblage d'électrode (100) ;
dans laquelle le boîtier comprend un premier couvercle (200) et un deuxième couvercle (300) ;
dans laquelle l'assemblage d'électrode (100) est reçu dans un espace formé entre le premier couvercle (200) et le deuxième couvercle (300) ;
dans laquelle le deuxième couvercle (300) présente une rigidité de surface supérieure à celle du premier couvercle (200) ;
dans laquelle le point de fusion d'une surface du premier couvercle (200) contactant le deuxième couvercle (300) est inférieur à celui d'une surface du deuxième couvercle contactant le premier couvercle ;
dans laquelle le premier couvercle (200) comprend :
une première couche métallique (232) composée d'un matériau métallique ;
une première couche externe (231) formée sur une surface externe de la première couche métallique;
une première couche interne (233) formée sur une surface interne de la première couche métallique (232);
et
dans laquelle le deuxième couvercle (300) comprend :
une deuxième couche métallique (332) composée d'un matériau métallique ;
une deuxième couche externe (331) formée sur une surface externe de la deuxième couche métallique ; et
une deuxième couche interne (333) formée sur une surface interne de la deuxième couche métallique (332) ; dans laquelle le point de fusion de la première couche interne (235) est compris entre 80°C et 120°C, le point de fusion de la deuxième couche interne (333) étant compris entre 130°C et 200°C.

2. Batterie secondaire (10) selon la revendication 1, dans laquelle le premier couvercle (200) et le deuxième couvercle (300) sont formés à partir de matériaux différents.

3. Batterie secondaire (10) selon la revendication 1, dans laquelle la capacité de la batterie secondaire (10) est comprise entre 4 Ah et 100 Ah.

4. Batterie secondaire (10) selon l'une quelconque des revendications précédentes, dans laquelle l'épaisseur du deuxième couvercle (300) est supérieure à celle du premier couvercle (200).

5. Batterie secondaire (10) selon l'une quelconque des revendications précédentes, comprenant en outre :
des parties d'étanchéité (230, 330) pour établir l'étanchéité de l'espace dans lequel l'assemblage d'électrode es reçu, en reliant une partie du premier couvercle et une partie du deuxième couvercle l'une à l'autre.

6. Batterie secondaire (10) selon l'une quelconque des revendications précédentes, dans laquelle ledit espace comprend des première et deuxième parties d'espace (220, 320) se faisant face.

7. Batterie secondaire (10) selon l'une quelconque des revendications précédentes, dans laquelle l'épaisseur de la deuxième couche métallique (332) est supérieure à celle de la première couche métallique (232).

8. Batterie secondaire (10) selon la revendication 7, dans laquelle l'épaisseur de la première couche métallique est comprise entre 40 µm et 50 µm, l'épaisseur de la deuxième couche métallique étant comprise entre 100 µm et 250 µm.

9. Batterie secondaire (10) selon l'une quelconque des revendications précédentes, dans laquelle le deuxième couvercle (300) comprend en outre une troisième couche externe (334) formée sur une surface externe de la deuxième couche externe.

10. Batterie secondaire (10) selon l'une quelconque des revendications précédentes, comprenant en outre des paries d'étanchéité (230, 330) pour établir l'étanchéité de l'espace dans lequel l'assemblage d'électrode est reçu, par adhésion thermique d'une partie de la première couche interne et d'une partie de la deuxième couche interne qui se contactent l'une l'autre.

11. Batterie secondaire selon l'une quelconque des revendications précédentes, dans laquelle la première couche interne (233) comprend un polyéthylène (PE) ou un polymère de PE.

12. Batterie secondaire selon l'une quelconque des revendications précédentes, dans laquelle la deuxième couche interne (333) comprend une polyoléfine ou un polypropylène coulé (CPP) ou du PP comme composant principal.

13. Batterie secondaire (10) selon l'une quelconque des revendications précédentes, dans laquelle deux ou plusieurs boîtiers, dans lesquels est reçu un dit assemblage d'électrode, sont empilés dans la batterie secondaire (10).

14. Batterie secondaire (10) selon la revendication 1, dans laquelle le point de fusion du premier couvercle (200) est compris entre 80°C et 120°C, le point de fusion du deuxième couvercle (300) étant compris entre 130°C et 200°C.

15. Batterie secondaire selon la revendication 14, dans laquelle le point de fusion du premier couvercle (200) est compris entre 90°C et 110°C.

16. Batterie secondaire selon la revendication 1, dans laquelle l'épaisseur du premier couvercle (200) est comprise entre 100 µm et 150 µm, l'épaisseur du deuxième couvercle (300) étant comprise entre 150 µm et 300 µm.
